# EUROPEAN PATENT APPLICATION

(11) **EP 1 705 506 A1**
(43) Date of publication of application: **27.09.2006**
(21) Application number: 06111397.3
(22) Date of filing: 20.03.2006
(51) Int. Cl.: G02B 7/00, F16B 43/00, F16B 5/02, F01D 25/00

(54) **Engineered flexure component**

(30) Priority: 22.03.2005 US 86972
(71) Applicant: Goodrich Corporation, Charlotte, North Carolina 28217 (US)
(72) Inventor: Hachkowski, Michael Roman, Ridgefield, CT 06877 (US)
(74) Representative: Gervasi, Gemma

(57) **Abstract**

An engineered flexure component for mounting on a substantially flat surface for improving dimensional stability therebetween has a member with an elastic mechanism being connected thereto. The elastic mechanism manages a shear force between the engineered flexure component and the substantially flat surface when the elastic mechanism contacts the substantially flat surface.

## Description

### BACKGROUND OF THE INVENTION

### 1. Field of the Invention

This invention relates to an engineered flexure component used at the bolted interfaces of precision optical instruments.

### 2. Description of the Prior Art

For precision structures, such as telescopes, it is important to understand the sources of mechanical hysteresis, which is defined as the dependence of the strain of a material not only on the instantaneous value of the stress, but also on the previous history of the stress. It is known that whenever two structural elements are bolted together, friction exists at the bolted interface. Bolted interfaces are a source of both damping and instability. Friction may be the cause of energy dissipation as the two surfaces slide past one another as well as cause the two mating surfaces to slide and stop in a new position relative to each other. At present, interface designers cannot explicitly control the percentages of forces that act across an interface through friction. Currently, many optic mounts for precision optical instruments are bolted directly to an optical bench. In a high vibration environment, the optic mounts tend to react to external forces and reposition themselves, thus causing the optical instrument to shift their position. Given the foregoing, there is a need for an engineered flexure component that is sufficiently flexible enough to bend and not slide as the mating surfaces of the bolted interface move relative to each other.

### SUMMARY OF THE INVENTION

According to the first embodiment the present invention provides an engineered flexure component according to claim 1.

A bolt flange is provided with parallel grooves across its surface. One bolt flange surface has grooves that run in a vertical direction, while a second bolt flange surface has grooves that run in a horizontal direction, such that they are perpendicular to the grooves of the first bolt flange mating surface. The purpose of the grooves is to create a surface that consists of flexures. These flexures cause two effects to occur at the bolted interface. First, for a given clamping force, the resulting surface pressure is greater because of the smaller contact area at the interface which in turn increases the friction force. Second, the flexures are sufficiently flexible enough to bend and not slide as the two interface surfaces move relative to each other. The flexure points may different configurations, i.e. squares, circles, triangles, or other geometric shapes. The designer can choose the type of flexure configuration that satisfies the calculated flexure bending stiffness to minimize transfer of structural forces through friction at the interface and the volume that the interface can satisfy. The grooving of the surfaces allows a designer of optical instruments to be capable of determining the stiffness of the resulting flexure as well as control the percentages of forces that are transferred across an interface through friction as compared with elastic bending.

The flexured interface also allows the designer to invoke load path management design rules. In summary, load path management is a process by which a designer can control the effect of friction by not affecting the frictional mechanisms, but by changing the elastic stiffness that surrounds the frictional element. Placing grooves or two dimensional flexures in the interface mating surfaces enables a designer to model the interface stiffness as a series of bending longitudinal beams, which in turn allows the designer to explicitly model the percentage of force that acts through friction via load path management design rules. A relationship between the physical design of the flexures and engineering practice can be found at the National Aeronautics and Space Administration Paper No.: TM-2000-210089 entitled "Design of Mechanisms for Deployable, Optical Instruments: Guidelines for Reducing Hysteresis" dated March, 2000 which is herein incorporated by reference in its entirety.

According to a further embodiment the present invention provides an engineered flexure component according to claim 9. Preferred embodiment opf the invention are disclosed in claims 2-8 and 10.

### BRIEF DESCRIPTION OF THE DRAWINGS

Fig. 1 is a perspective view of the engineered flexure component of the present invention;
Fig. 2 is a perspective view of an alternative embodiment to the engineered flexure component of Fig. 1;
Fig. 3 is an exploded view of a flexured assembly utilizing the embodiment shown in Fig.1;
Fig. 4 is an exploded view of a flexured assembly utilizing the alternative embodiment shown in Fig. 2;
Fig. 5 is a model showing the force transfer in both the conservative and non-conservative load paths that may exist at the interface of a flexured assembly and
Fig. 6 is an illustration of the load paths that exist across the interface of a flexured assembly.
Fig. 7 is a first perspective view of an engineered flexured component for mounting on a flat surface.
Fig. 8 is a perspective view of the engineered flexure component of Fig. 7 being inverted for mounting on a flat surface.
Fig. 9 is a perspective view of another exemplary embodiment of the engineered flexured component for mounting on a flat surface.

### DETAILED DESCRIPTION OF THE INVENTION

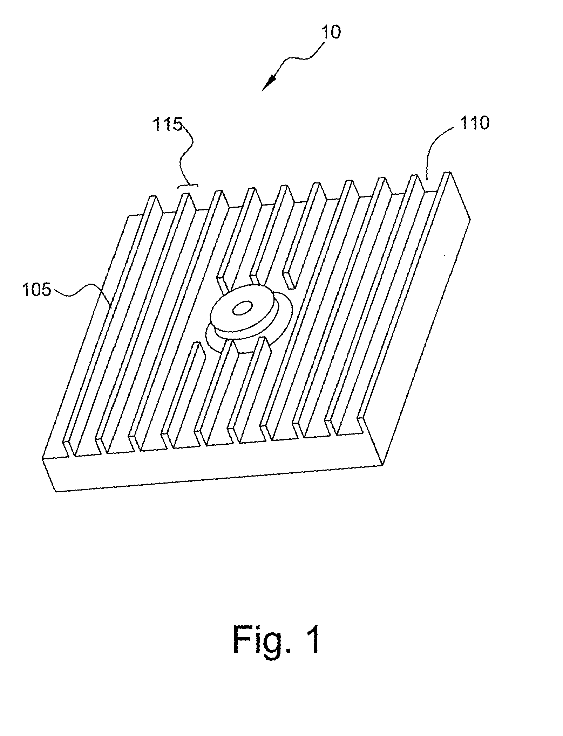

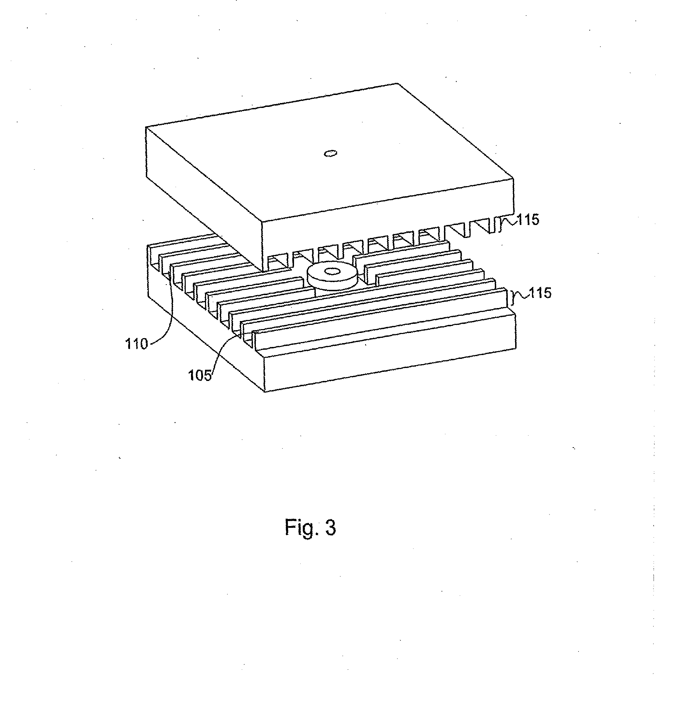

Referring to the drawings, and in particular, Fig. 1, there is provided a bolt flange 10 having a front surface 105. Bolt flange 10 is provided with parallel grooves 110 which transverse front surface 105. As shown in Fig. 1, grooves 110 transverse front surface 105 in a vertical direction. As shown in Fig. 3, front surface 105 of a second bolt flange has grooves which transverse front surface 105 in a horizontal direction, such that they are perpendicular to grooves 110 of the first bolt flange front surface 105 when the first and second bolt flanges are bolted together creating an interface.

The purpose of grooves 110 is to create a flexure 115 . Flexures 115 cause two effects to occur at a bolted interface. First, for a given clamping force, the resulting surface pressure is greater because of the smaller contact area at the interface which in turn increases the Coulombic friction force. Second, flexures 115 provide additional flexibility such that the percentage of force transmitted across the interface is reduced. The width and height of flexures 115 is determined by the flexure bending stiffness, flexure axial stiffness, flexure tortional stiffness, flexure buckling limit and load path management design rules.

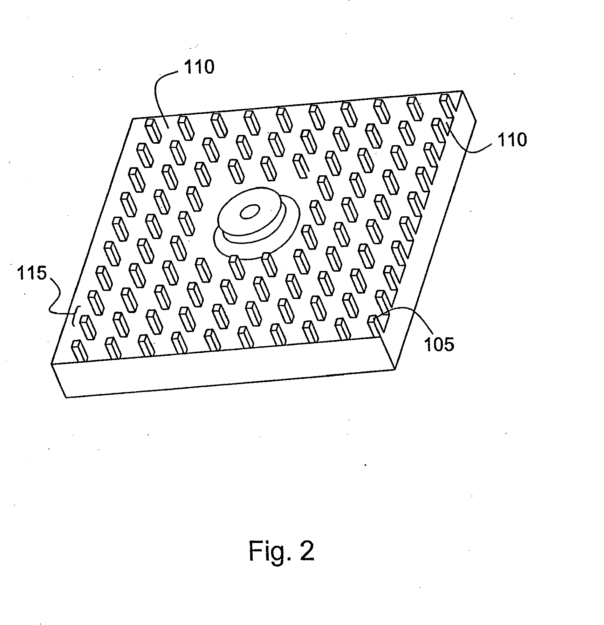

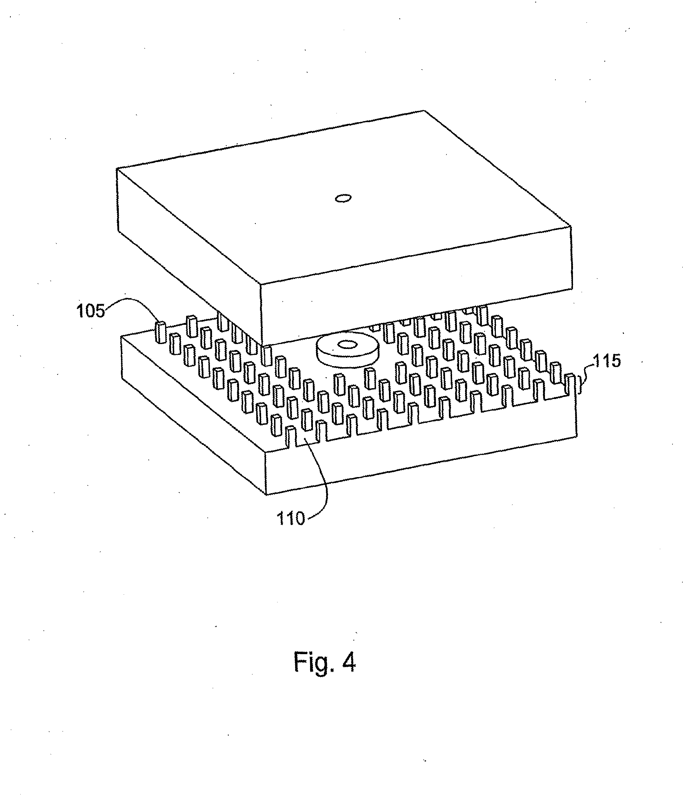

Fig. 2 is an alternative embodiment in which grooves 110 transverse front surface 105 in both the vertical and horizontal directions, creating a cross-hatched appearance. As shown in Fig. 4, this embodiment is used when the bolt flange comes into with a flat, smooth surface. In other alternative embodiments, the flexure points may have different configurations, i.e. squares, circles, triangles, or other geometric shapes.

Load path management theory states that it is possible to reduce or tailor the effect of interface friction by affecting the elastic mechanisms that surround the friction element. Due to the dependency that hysteresis has on the relative magnitudes of stiffness at an interface, load path management states that it is possible to reduce the dissipation due to friction at an interface not by affecting the friction mechanism, but by changing the relative magnitudes of stiffness at a mating interface. At any interface between two mating bodies, it has been observed that there are at least three stiffness that are managed or a normal contact stiffness that is the compression stiffness in the direction of contact, a contact shear stiffness that is perpendicular in the direction of the contact and a global stiffness of both elastic bodies that are in contact with each other. This can be achieved by changing the design of the interface by changing the ratio of contact normal stiffness to shear stiffness and global stiffness to shear stiffness to increase the percentage of load transferred through internal elastic mechanisms.

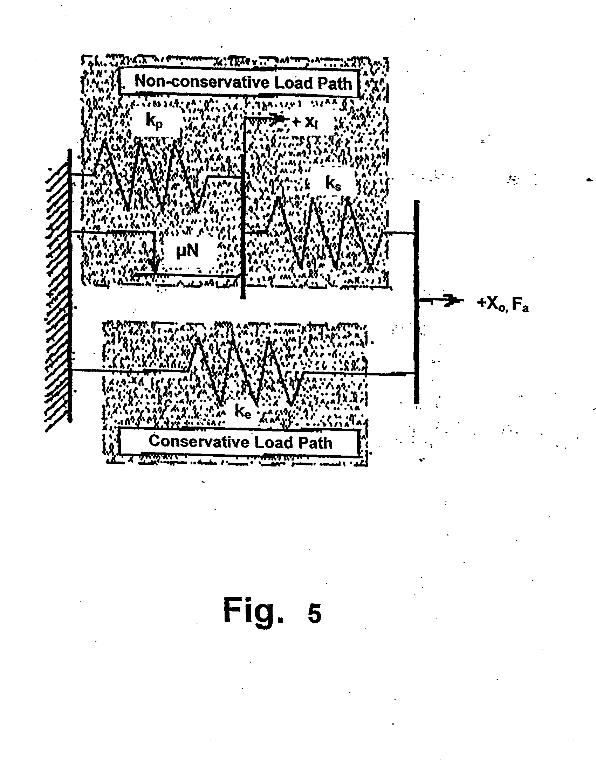

When force is transferred across a physical interface, normal and tangential stresses and local deformations occur at the interface. When load transfer occurs through normal stresses at the interface, the load path is elastic, i.e. conservative. When load transfer occurs through shear stress at the interface, friction must be present and thus slippage can occur. When load transfer occurs across friction interfaces, it is considered non-conservative. This force transfer is shown in the interface model of Fig. 5. This model is comprised of two distinct segments and is a representation of the conservative and non-conservative load paths that may exist at an interface. The conservative segment of the model represents an interface design for which there are only elastic mechanisms (other than material hysteresis) in the load path. The non-conservative segment of the model represents a combination of elastic and friction mechanisms that exist in a non-conservative load path. The hysteretic mechanism of the interface is represented by a Coulombic friction mechanism which is in parallel with a linear spring element (kp) as well as in series with another linear spring element (kₛ). A Coulombic friction mechanism was chosen because it represents the hysteretic mechanics that exist at an interface. A linear, elastic mechanism (kₑ) in parallel with the non-conservative load path represents the conservative load path at an interface. The analytical model of Fig. 4 represents such an interface. This interface model illustrates how an externally applied load (Fₐ) may be divided into elastic (i.e. normal) and inelastic (i.e. tangential) load path components for load transfer across the interface. The kₑ elastic element of the model represents the elastic behavior of the body from the application of the external load to normal stress at the interface. The ks elastic mechanism of the model represents the elastic behavior of the body from the application of the external load to shear stress at the interface. Load transfer across the interface is represented by an elastic mechanism (kp) in parallel with the friction mechanism ΦN. The elastic mechanism kp represents the portion of the shear load that is transferred across an interface elastically, i.e. regions within the contact area where slip does not occur. The friction mechanism represents the portion of the shear load that is transferred across an interface in-elastically, i.e. regions within the contact area where slip does occur.

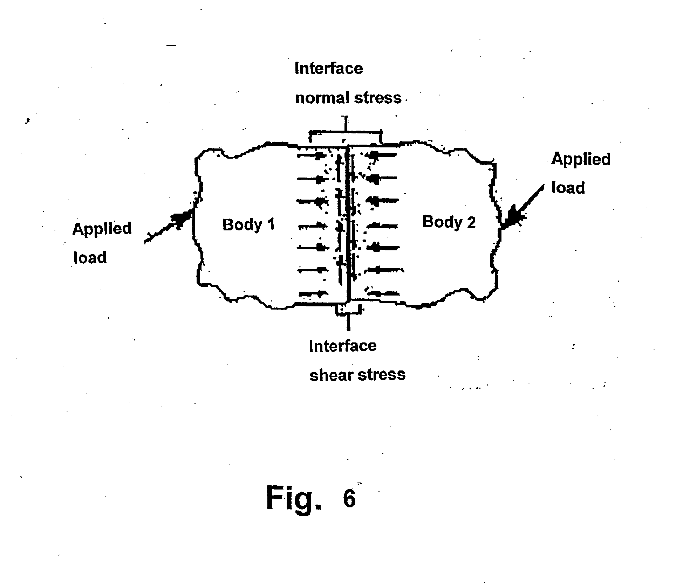

Using a loss factor analysis, it is shown that if displacement-dependent friction exists in the model shown in Fig. 6, it is possible to reduce the friction effect by changing the relative magnitudes of internal stiffness such that an ever increasing percentage of the force is transferred through internal elastic mechanisms, i.e. load path management. The engineered flexure component of the present invention involves changing the value of kₛ, the elastic spring constant associated with the elastic behavior of the body from the application of the external load to the shear stress at the interface. Reducing the spring stiffness kₛ reduces the percentage of force that acts through elastic mechanisms. This changing of the local interface between the mating surfaces of structural elements allows the mating surfaces to return to their original position because the flexure points bend, but do not slide with respect to each other.

A bolt flange is provided with parallel grooves across its surface. One bolt flange surface has grooves that run in a vertical direction, while a second bolt flange surface has grooves that run in a horizontal direction, such that they are perpendicular to the grooves of the first bolt flange mating surface. The purpose of the grooves is to create a surface that consists of flexures. These flexures cause two effects to occur at the bolted interface. First, for a given clamping force, the resulting surface is greater because of the smaller contact area at the interface which in turn increases the friction force. Second, the flexures are sufficiently flexible enough to bend and not slide as the two interface surfaces move relative to each other. The flexure points may different configurations, i.e. squares, circles, triangles, or other geometric shapes. The grooving of the surfaces allows a designer of optical instruments to be capable of determining the stiffness of the resulting flexure as well as control the percentages of forces that are transferred across an interface through friction as compared with elastic bending. The flexured interface also allows the designer to invoke load path management design rules. In summary, load path management is a process by which a designer can control the effect of friction by not effecting the frictional mechanisms, but by changing the elastic stiffness that surrounds the frictional element. Placing grooves in the interface mating surfaces enables a designer to model the interface stiffness as a series of bending beams, which in turn allows the designer to explicitly model the percentage of force that acts through friction.

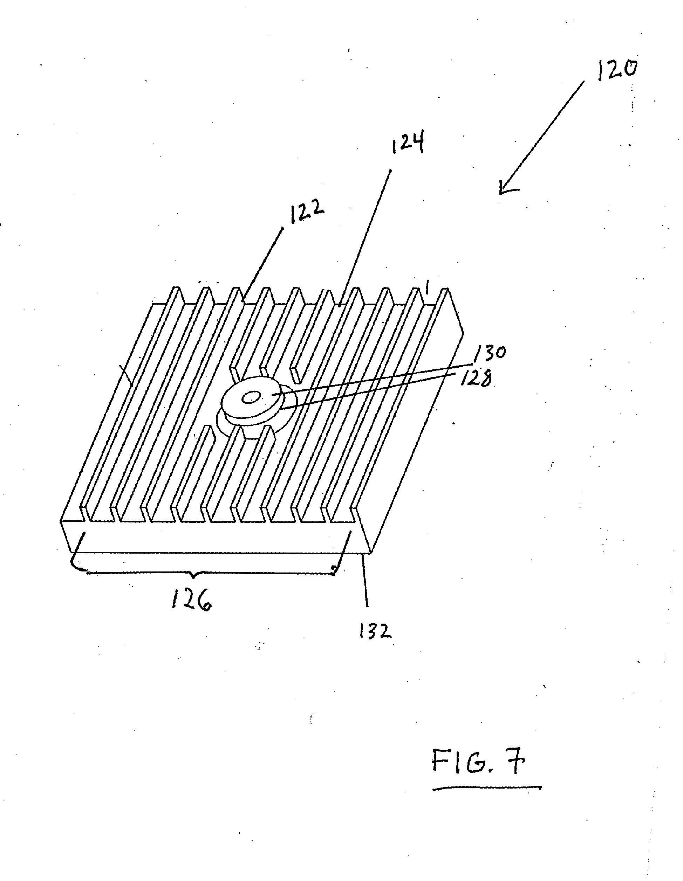

Referring now to Figure 7, there is shown another second exemplary embodiment of a first component 120 for contacting a flat surface. Most preferably, the embodiment shown where each surface has flexures is preferred because of the opportunity to tailor the interface stiffness of each surface. Alternatively, the embodiment shown in Fig. 7 is preferably for a retrofit or high strength application. The first component 120 has an elastic component 122 being disposed on a first side 124 thereof. The elastic component 122 preferably is a number of flexures 126. Most preferably, each of the flexures 126, notches or grooves improve a dimensional stability of the first component 120 when placed on another component and likewise improves the dimensional stability of high precision devices mounted, resting on, connected or attached to the first component.

Most preferably, the first component 120 has a very unexpected benefit because the first component having the elastic component 122 manages a shear force acting through friction mechanisms when the first component is rested or in contact with a another component.

In the prior art it is known that to improve dimensional stability or a position from one prior art component to another one would increase a clamping force between a first prior component and a second prior art component. The prior art mistakenly believes that this increase in a clamping force improve dimensional stability between two components.

However, the inventor of the present invention recognizes that the increase in the clamping or force between the first prior art component and the second prior art component did nothing to reduce, or otherwise manage shear forces acting through friction mechanisms. It has been observed that shear forces acting through friction mechanisms cause instability between two contacting components. The inventor recognized and discovered that contrary to the prior art that to improve dimensional stability or the relative position between two components, it is necessary to manage shear forces acting through friction mechanisms as discussed in Lake, et al., National Aeronautics and Space Administration Paper No.: TM-2000-210089, Langley Research Center, Hampton Virginia, entitled "Design of Mechanisms for Deployable, Optical Instruments: Guidelines for Reducing Hysteresis" dated March, 2000 which was previously incorporated by reference in its entirety. Thus, the first component 120 of the present invention preferably maintains positional stability by managing at least a percentage of shear forces acting through friction mechanisms.

In this preferred embodiment, the number of flexures 126 of the first component 120 preferably changes or modulates a local shear by a stiffness of a portion the first component contacting a second component. This modulating or a change in the stiffness at the interface assists with transferring a load. This load is transferred using an internal elastic mechanism in or on the first component 120. Thus, the number of flexures 126 permit the first component 120 to maintain stability relative to another component in a very advantageous manner contrary to the teachings of the prior art.

This first component 120 has an unexpected advantage in the art, as most solutions teach away from this solution or to simply increasing the clamping force and hold the two components together more tightly. The number of flexures 126 preferably reduce hysteresis by providing an elastic and reversible mechanism. The flexures 126 allow the first component 120 to remain stable or in position relative to the second or flat contacting component. In this preferred embodiment, the second component is a flat surface or a second flat component.

Referring now again to Fig. 7, there is shown a perspective view of the first component 120. There is no preferred material type for the first component 120. Again, the number of flexures is dependent on the loads/forces that will be transferred across the interface. In this preferred embodiment, the flexures 126 of the first component 120 each have a size. The size is preferable any size in the art depending on the application and size of the component 120, the precision instrument thereon or application. However, in one preferred embodiment, the number of flexures 126 each have a size in a range that is no greater than ten to twenty millimeters. In another preferred embodiment of the present invention, typical application are envisioned to be up to about two centimeters in height. In still other less preferable applications, the size or height of the flexures could be greater than two centimeters in height. One skilled in the art should appreciate that the number of flexures 126 may be made of an elastic material, or two or more materials with one of the two or more materials being elastic. Each of the flexures 126 being disposed thereon on the first component 120 may further be individually the same or different materials, however should be suitable to move very slightly to absorb shear force attributed to friction at a non-noticeable or microscopic level. Instability of the mating surface can be defined in terms of microns, for example 1 X 10e-6 meters in dimension or less such as in nanometers in a range that includes about 1X10 e-9 meters.

Additionally, the first component 120 may or may not be formed with any aperture 128, or any bolted flange 130. The aperture 128 and any bolted flange 130 shown in Fig. 7 form no part of the claimed invention. The first component 120 may be manufactured without any aperture 128 or bolt flange 130, or may be manufactured with other securement devices that are well known in the art.

The first component 120 preferably in one non-limiting embodiment is made into a orthogonal shaped member as shown. However, the first component 120 may be made to have any shape known in the art for use with high precision optical instruments or any other instrument that requires positional stability between two components. [Please verify]. A side 132 of the first component 120 being opposite the first side 24 with the number flexures 126 is shown as flat. This flat side 132 preferably is to assist with the high precision device (not shown) being connected or secured thereto in a stable and easy manner, however the first component is not limited to this arrangement. The side 132 may have any suitable geometry known in the art.

The first component 120 preferably also has a thickness that may be any thickness known in the art so as to maintain the structural integrity of the first component and to add resiliency to the first component for repeated usage. The thickness is any suitable thickness so as to prevent bending of the support structure for a given set of operational forces that would cause the flexures to no longer be in contact with each other in one preferred embodiment.

Some or all of the flexures 126 of the first component 120 are elastic. The flexures 126 of the first component 120 preferably has a predetermined elasticity or flexibility to manage the shear forces attributed to friction between the first component and the second flat component. The predetermined flexibility reduces a force transmitted from the friction across the interface when the first component 120 contacts the second component.

In one embodiment of the present invention, the flexures 126 are readily separable from the second flat component. One skilled in the art should appreciate that the global stiffness characteristics of each of the first component 120 and the second contacting component are not changed.

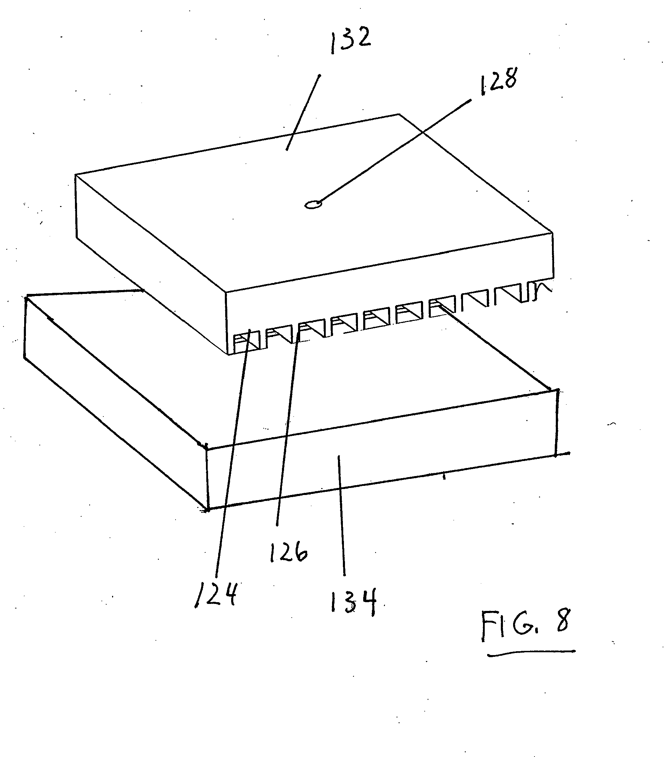

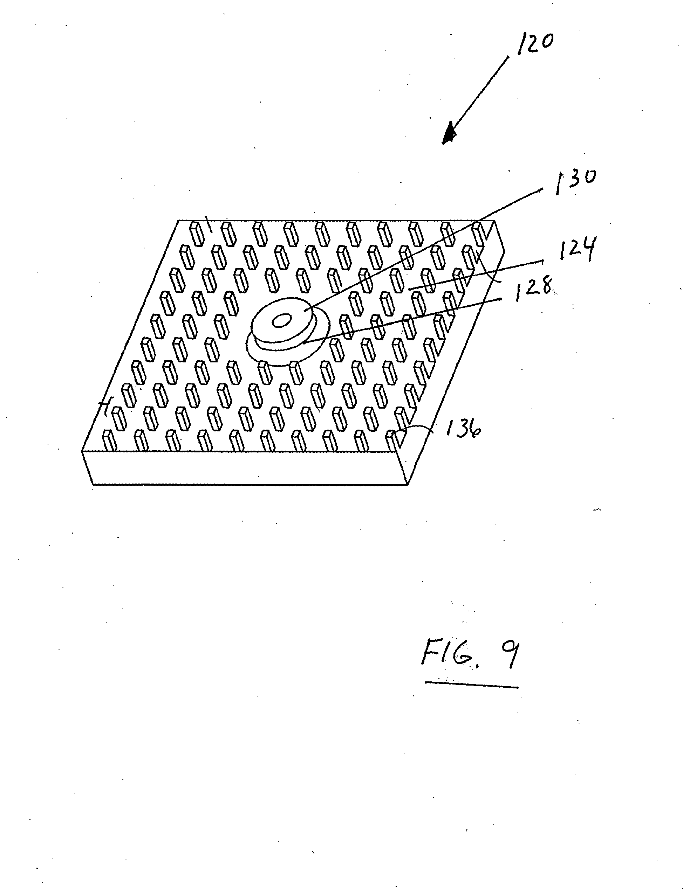

Referring now to Fig. 8, there is shown the first component 120 being inverted for contacting a second flat component 134 so the flexures 126 each contact the second flat component. One skilled in the art should appreciate that the flexures 126 contact the second flat component while the remainder of the first component 120 does not. A precision instrument is then placed on the side 132 and are optionally connected by the bolt flange 130 through the aperture 128 of the first component 120. The flexures 126 may be formed as one or more grooves being disposed longitudinally or laterally across the surface or first side 124 of the first component 120. Alternatively, the first component 120 preferably can be a number of sets of grooves in both a longitudinal direction or a lateral direction of the component and the flexures may be a number of orthogonal shaped nubs 136 as shown in Fig. 9, or rows of flexures in a horizontal or vertical direction. Preferably, the nubs 136 have a size in a range that includes about ten to twenty millimeters. Typical applications are envisioned to be up to about or in a range of two centimeters in height. Load path management as well as buckling beam theory may require flexures that are greater in height than two centimeters but these would be less preferred.

In another exemplary embodiment of the present invention, the first component 120 shown in Fig. 7 may be connected to, mounted on, or rest on an optics bench that is substantially flat. In this embodiment, the first component 120 may be directly applied to the flat optics bench. However, alternatively in another embodiment of the present invention, the user may alter the substantially flat optics bench surface. The user at the interface between the first component 120 and the optics bench, may apply or directly groove, etch or otherwise form a number of second flexures. Each of the second flexures thereon has a second orientation and is directly formed into the optics bench in order to retrofit the optics bench. As long as bending beam and buckling beam theory is used, these etched flexures could have similar or different stiffness and elasticity properties as is with the other embodiments. In another embodiment, a number of second flexures may be formed and directly applied or connected to the optics bench.

This embodiment is especially beneficial for retro-fitting a bolted interfaces in order to get better stability at the interface. In this preferred embodiment, in an existing optics bench a position will be selected. Preferably, the position is a flat, non-grooved surface depending on the application. A preselected surface of the optics mount can then be grooved. The grooves may be made in any orientation that is complementary to the first component 120 to improve positional stability. Preferably, the second grooves formed in the optics bench or flat surface are about ten to about twenty millimeters in depth. The second grooves may be perpendicular or parallel to the orientation of the flexures 126 of the first component 120, or alternatively may be formed as one or more nubs as shown in Fig. 3.

The present invention having been described with particular reference to the preferred forms thereof, it will be obvious that various changes and modifications may be made without departing from the spirit and scope of the invention as defined in the appended claims.

## Claims

1. An engineered flexure component for mounting on a substantially flat surface for improving dimensional stability there between, the engineered flexure component comprising:
a member having a continuous base and a first surface integral with said base, said first surface having a plurality of elongated grooves therein, said plurality of elongated grooves creating a plurality of flexures which project from and are integral with said continuous base, said flexures being an elastic mechanism for managing a shear force between the engineered flexure component and the substantially flat surface when said flexures contact said substantially flat surface.

2. The engineered flexure component of claim 1, wherein said plurality of flexures:
a) extend across the member, wherein said member does not directly contact said substantially flat surface, and wherein said plurality of flexures directly contact said substantially flat surface;
b) transfer said shear force through a reversible elastic mechanism, and wherein said shear force depends from a friction force between said member and said substantially flat surface, said friction force causing in part a dimensional instability;
c) each have a predetermined height, a predetermined width, and a predetermined elasticity; or
d) extend along a length of said member, and wherein each of said plurality of flexures are parallel to each other.

3. The engineered flexure component of claim 1, wherein said elastic mechanism reduces said shear force between the engineered flexure component and the substantially flat surface.

4. The engineered flexure component of claim 1, wherein:
a) said plurality of flexures completely transverse said first surface of said member;
b) each of said flexures has a height ranging from about 2,54 mm to about 25,4 mm (0.1" inch to about 1 inch);
c) said plurality of flexures each have a width ranging from about 1,27 mm to about 6,35 mm (0.050" inch to about 0.250" inch); or
d) said member is removable from said substantially flat surface.

5. The engineered flexure component of claim 1, further comprising a mounting device.

6. The engineered flexure component of claim 1, wherein:
a) said plurality of flexures each have a height being in a range that is no greater than ten to twenty millimeters;
b) said member is an inelastic resilient material, and wherein said plurality of flexures are each an elastic material; or
c) said member is an inelastic resilient material, and wherein said plurality of flexures each have a portion that is an elastic material.

7. The engineered flexure component of claim 1, wherein said member has a side opposite said plurality of flexures, and wherein said side has a geometry suitable for mounting a precision instrument thereon, preferably said precision instrument is a telescope.

8. The engineered flexure component of claim 1, wherein:
a) said flexures comprise a plurality of nubs projecting from and integral with said continuous base, each of said plurality of nubs having a generally orthogonal shape, and being suitable for contacting said substantially flat surface, and wherein said member has a side opposite said plurality of nubs, said side having a geometry suitable for mounting a precision instrument thereon; or
b) said elastic mechanism improves the dimensional stability by modulating said shear force between the engineered flexure component and the substantially flat surface, said shear force depending from friction therebetween.

9. An engineered flexure component for reducing an effect of interface friction for a precision mount by effecting an elastic mechanism that substantially surrounds said engineered flexure component comprising:
a first component having a continuous base and a first surface integral with said base, said first surface having a plurality of elongated first grooves therein and having a first orientation; and
a second component having a second flat surface, the second flat surface being in contact with said grooved first surface of said first component, said contact defining an interface, wherein said plurality of first grooves define at least one flexure having a first front surface, said at least one flexure projecting from and being integral with said continuous base, said at least one flexure having a predetermined flexibility, said predetermined flexibility reducing a force transmitted from the friction across said interface, wherein said plurality of first grooves each have a depth, and wherein said depth is in a range of about ten to about twenty millimeters.

10. The engineered flexure component of claim 9, further comprising a plurality of etched second grooves in or on said contacting flat surface of said second component, said plurality of etched second grooves having a second orientation and forming at least one second flexure, said at least one second flexure having a second front surface contacting said first front surface of said at least one flexure at said interface, said first orientation of said plurality of first grooves and said contacting at least one flexure front surface of said first component being different from said second orientation of said plurality of second grooves and said at least one second flexure front surface of said second component, preferably said plurality of etched second grooves each have a depth in a range of about ten to about twenty millimeters, and wherein said plurality of etched second grooves have a complementary orientation to said plurality of first grooves; more preferably said plurality of etched second grooves each have a depth in a range of about ten to about twenty millimeters, and wherein said plurality of etched second grooves have a complementary orientation that is substantially perpendicular to said plurality of first grooves.
